# EUROPÄISCHE PATENTSCHRIFT

(11) **EP 1 436 955 B1**
(45) Veröffentlichungstag und Bekanntmachung des Hinweises auf die Patenterteilung: **12.03.2008**
(21) Anmeldenummer: 02776839.9
(22) Anmeldetag: 17.10.2002
(51) Int. Cl.: H04L 12/56

(54) **VERFAHREN ZUR VERKEHRSSTEUERUNG BEI VIRTUAL TRUNKING ÜBER EIN PAKETORIENTIERTES NETZ**
METHOD FOR CONTROLLING TRAFFIC IN A VIRTUAL TRUNKING PROCESS VIA A PACKET-ORIENTED NETWORK
PROCEDE DE CONTROLE DE TRAFIC DANS UN PROCESSUS DE JONCTION VIRTUEL VIA UN RESEAU DE PAQUETS ORIENTES

(30) Priorität: 18.10.2001 DE 10151442
(43) Veröffentlichungstag der Anmeldung: 14.07.2004
(73) Patentinhaber: Nokia Siemens Networks GmbH & Co. KG, 81541 München (DE)
(72) Erfinder: LIEBHART, Rainer, 86529 Schrobenhausen (DE); KNÄBCHEN, Andreas, 81377 München (DE)
(86) Internationale Anmeldenummer: PCT/DE2002/003935
(87) Internationale Veröffentlichungsnummer: WO 2003/036842

(56) Entgegenhaltungen:
- EP-A- 1 065 858
- WO-A-01/05098
- FERNANDO CUERVO ET AL: "SS7-Internet Interworking - Architectural Framework" IETF DRAFT, Juli 1998 (1998-07), XP002171309 Gefunden im Internet: <URL:ftp://standards.nortelnetworks.com/me gaco/docs/Expired/> [gefunden am 2001-07-06]
- "ITU-T Recommendation H.323: Visual telephone systems and equiment for local area networks which provide a non-guaranteed quality of service" ITU-T H.323, XX, XX, November 1996 (1996-11), Seite COMPLETE XP002227146
- DUFFIELD N ET AL: "A performance oriented service interface for Virtual Private Networks" IETF DRAFT, November 1998 (1998-11), XP002227148 Gefunden im Internet: <URL:http://www.watersprings.org/pub/id/dr aft-duffield-vpn-qos-framework.00.t> [gefunden am 2003-01-20]

## Beschreibung

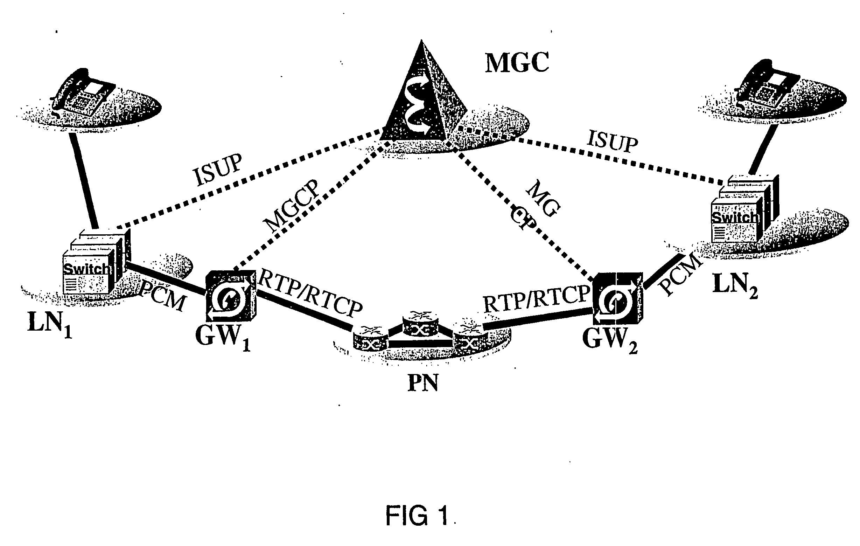

Unter 'Virtual Trunking' wird die Übertragung von Telefon- oder Faxverbindungen zwischen zwei Teilnehmern des "normalen" Telefonnetzes (PSTN oder ISDN) über ein Paketnetz wie z.B. ein IP Netz verstanden. Den Übergang vom Telefonnetz zum Paketnetz und umgekehrt übernehmen dabei Gateways, die an das Telefonnetz über gewöhnliche PCM Strecken angebunden sind und die Sprachsignale in Pakete wandeln. Die Steuerung der Gateways erfolgt über sogenannte Media Gateway Controller (MGC), die die aus dem Telefonnetz kommenden Signalisierungsnachrichten (z.B. ISUP Nachrichten) bearbeiten und weitersenden. Dabei können auch mehrere MGC in eine Verbindung involviert sein. Die Steuerung für jede Verbindung liegt also im MGC, die Gateways erhalten vom MGC im wesentlichen Einstellbefehle zum Belegen oder Freigeben eines bestimmten PCM-Ports. Als Steuerungsprotokoll kann z.B. MGCP oder MEGACO (Media Gateway Control Protocol) verwendet werden. Eine Übersicht über das Virtual Trunking Szenario findet sich in FIG 1.

'Quality of Service' (QoS) - auch Dienstgüte genannt - wird je nach Kontext unterschiedlich definiert und in der Folge mit jeweils unterschiedlichen Metriken bewertet. Bekannte Beispiele für Metriken zur Messung von Dienstgüte sind die maximal übermittelbare Anzahl von Informationen (Bandwidth), die Anzahl der übermittelten Informationen, die Anzahl der nicht übermittelten Informationen (Loss Rate), die - ggf. gemittelte - zeitliche Verzögerung bei der Übermittlung ((Transmission) Delay), die - ggf. gemittelte - Abweichung vom ansonsten üblichen Abstand zwischen je zwei Informationsübermittlungen (Delay Jitter, Interarrival Jitter), oder die Anzahl der erst gar nicht zur Übermittlung zugelassenen Informationen (Blocking Rate).

Während die gute Sprachqualität im digitalen Telefonnetz durch die Verwendung fester Kanäle mit einer Kapazität von 64 kbps sichergestellt wird, bietet ein Paketnetz von sich aus noch keine ausreichende Qualität für die Sprachübermittlung, außer das Netz wird derart überdimensioniert, dass es jeden anfallenden Verkehr zu jeder Zeit aufnehmen kann. Im Fall von Virtual Trunking ist die Sprachqualität aber von besonderer Bedeutung, da die Teilnehmer keinen Unterschied zur Qualität eines leitungsvermittelten Netzes bemerken sollen. Für den Teilnehmer existiert auch kein unmittelbarer Mehrwert gegenüber der leitungsvermittelten Telephonie.

Zur Zeit werden mehrere Methoden zur Sicherstellung der Übertragungsqualität in Paketnetzen in den verschiedenen Standardisierungsgremien, wie z.B. bei der IETF, untersucht. Als Beispiel sei nur die Einteilung der Pakete in verschiedene Priorisierungsklassen erwähnt (DiffServ-Ansatz), wobei Sprache sehr hoch priorisiert wird. Flächendeckende Implementierungen dieser Methoden gibt es allerdings noch nicht. Darüber hinaus können trotz Einsatzes dieser Methoden Engpässe im Paketnetz, ausgelöst durch Überlast oder Hardwareausfälle, auftreten, die dann die Sprachqualität vieler Verbindungen beeinträchtigen.

Es wäre wünschenswert und für die Akzeptanz von Virtual Trunking wichtig, auf Überlast oder Hardwareausfälle so zu reagieren, dass zumindest die durch die Kunden subjektiv empfundene Sprachqualität nicht nachhaltig leidet.

Bekannt ist, bei Auftreten einer Reduzierung der Übertragungsqualität im Paketnetz durch manuelles Eingreifen im MGC oder einer vorgelagerten PSTN/ISDN-Vermittlungsstelle den Verkehr von einem bestimmten Ursprung oder zu einem bestimmten Ziel hin auszudünnen. Der Betreiber des Paketnetzes sammelt dazu Daten über die Qualität der Verbindungen (falls möglich) und stellt sie dem Betreiber des MGC bzw. der Vermittlungsstellen im Telefonnetz zur Verfügung. Diese leiten daraufhin (mit der entsprechenden Zeitverzögerung) Maßnahmen zur Drosselung des Verkehrs ein. Falls sich die Sprachqualität wieder verbessert, werden die Drosselmechanismen manuell wieder zurückgenommen. Dieses Verfahren ist fehleranfällig und mit großen Verzögerungszeiten behaftet. Falls keine QoS Daten durch den Betreiber des Paketnetzes ermittelt werden können, können nur aufgrund von Testverbindungen oder Kundenbeschwerden geeignete Maßnahmen ergriffen werden.

Aus EP 1 065 858 ist eine Netzwerkanordnung zum Bereitstellen von IP-Diensten bekannt, die eine Mehrzahl von labelgeschalteten Media-Gateways aufweist, welche jedes ein Interface für einen oder mehrere Subscriberanschlüsse des Netzwerks zur Verfügung stellen. Die Netzwerkanordnung verfügt über Call-Server, welche anhand von Tunneln durch die Netzwerkanordnung zu routende Verbindungen aufbauen. Dabei wird Datenverkehr nur in einen Tunnel aufgenommen, wenn dieser Tunnel über ausreichend Bandweite verfügt.

Aus der WO 01/05098 A1 ist ein paketbasiertes drahtloses Point-to-Multipoint-Netzwerk mit einer drahtlosen Basisstation, die über ein paketbasiertes Übertragungsprotokoll mit einem Datennetz kommuniziert, bekannt. Die Übertragungsressourcen werden dabei unter dem Gesichtspunkt der Optimierung der vom Benutzer wahrgenommenen Dienstgüte aufgeteilt.

"SS7-Internet Interworking - Architectural Framework", IETF Draft, Juli 1998, stellt ein Framework für SS7-Internet Interworking dar, auf das bekannte Protokolle abgebildet werden können.

Die ITU-T Empfehlungen H.323 betreffen Bildtelephoniesysteme für paketbasierte LANs, welche eine nicht-garantierte Dienstgüte besitzen.

"A Performance Oriented Service Interface for Virtual Private Networks", IETF Draft, November 1998, stellt ein QoS-Framework für IP-basierte virtuelle private Netzwerke (VPNs) vor.

Es ist Aufgabe der Erfindung, den vorstehend beschriebenen bekannten Stand der Technik verbessern.

Diese Aufgabe wird durch die in den Ansprüchen beschriebene Erfindung gelöst.

Es wird vorgeschlagen, den aktuellen Status der Übertragungsqualität im Paketnetz für Verbindungen zwischen zwei Gateways zu ermitteln und bei schlechter Qualität den Zugang zum Netz über bestimmte Gateways zu drosseln und eventuell zu anderen Gateways umzulenken, um so überlastete oder defekte Zugänge oder Wege entlasten zu können. Dies führt dazu, dass die objektiv und subjektiv empfundene Sprachqualität durch die Kunden nicht nachhaltig leidet.

Ein Aspekt der Erfindung liegt darin, verbindungsbezogene Qualitätsdaten im Fall von Virtual Trunking über IP basierte Netze bereitzustellen und mittels dieser Daten den Verkehr in das IP Netz ursprungs- oder wegebezogen zu reduzieren und möglicherweise umzulenken, um so die Sprachqualität der bestehenden und neuen Verbindungen auf einem hinreichend hohen QoS Niveau zu halten.

Die vorliegende Erfindung geht von der Tatsache aus, dass bei der Übertragung von Nutzdaten wie z.B. Sprache über ein IP Netz das Übertragungsprotokoll RTP (Real Time Protocol) verwendet wendet wird. RTP und das zugehörige Steuerungsprotokoll RTCP (Real Time Control Protocol) bieten die Möglichkeit auf beiden Seiten der Verbindung, also bei Virtual Trunking in beiden beteiligten Gateways, Daten über die QoS der Verbindung in Vorwärts- und Rückwärtsrichtung zu sammeln und auszuwerten. Diese Daten enthalten z.B. Werte über die mittlere Verzögerungszeit der gesendeten und empfangenen Pakete oder die Zahl der verlorengegangenen Pakete.

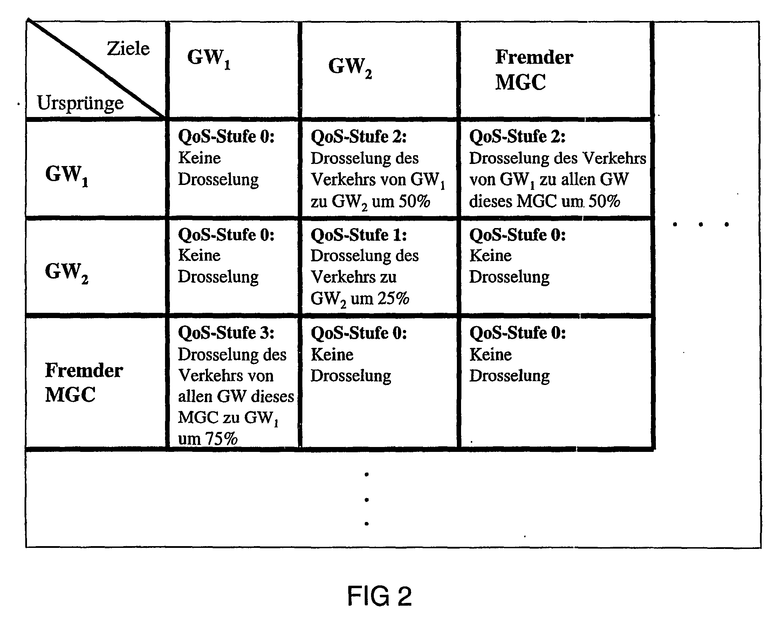

Es wird vorgeschlagen, dass die Gateways die QoS Daten für eine Verbindung sammeln und am Ende der Verbindung an den MGC senden. Im MGC wird nun aus allen möglichen Ursprüngen und Zielen, also allen Gateways, die vom MGC gesteuert und alle anderen MGC, mit denen Signalisierungsnachrichten ausgetauscht werden, eine Matrix aufgebaut wird, die in FIG 2 beispielhaft dargestellt ist. In dieser Matrix werden transient die von den einzelnen Gateways gelieferten QoS Daten gespeichert und bewertet (alternativ können auch die Gateways bereits eine Bewertung der Daten vornehmen und an den MGC senden). Daten von Gateways, die von einem fremden MGC gesteuert werden, werden unter dem Eintrag für den fremden MGC zusammen gefasst. Je nach Größe der Verzögerungszeiten, der Anzahl verlorener Pakete oder anderer QoS Daten können so für jede Ursprungs/Zielbeziehung verschiedene Stufen der QoS Einschränkung festgelegt werden. Abhängig von den ermittelten QoS Stufen können nun Maßnahmen für jedes einzelne Element der Matrix (dies entspricht gerade dem Weg von einem Ursprungs- zu einem Ziel-Gateway) oder für die Matrix als Ganzes definiert werden. Diese Maßnahmen legen fest, wie viel des Verkehrs vom Ursprungs-Gateway zum Ziel-Gateway bei einer bestimmten QoS Stufe abgewiesen werden soll. Auf der Diagonalen der Matrix werden dabei die Maßnahmen eingetragen, die sich auf ein Gateway unabhängig von einem bestimmten Ziel beziehen. Dadurch kann bei HW-Ausfällen im Gateway selber oder im Accessbereich des Gateways der Verkehr zu diesem Gateway generell gedrosselt werden. Die ermittelten QoS Stufen können auch benutzt werden, um Alarme oder Tickets zu generieren, die den Netzbetreiber auf QoS Probleme gezielt hinweisen.

Als Drosselmaßnahmen sind z.B. die prozentuale Ausdünnung des Verkehrs, die zeitliche Sperrung des Verkehrs oder die Reduzierung des Verkehrs auf eine festgelegte Anrufrate (Leaky Bucket) verwendbar. Bei erfolgter Drosselung des Verkehrs ist es möglich in vorgelagerten Vermittlungsstellen eine erneute Wegesuche durchzuführen und so den abgewiesenen Verkehr über ein anderes Gateway in das IP Netz zu führen.

Falls die fortlaufend gesammelten und ausgewerteten QoS Daten anzeigen, dass die QoS sich verbessert hat, werden die eventuell eingeleiteten Drosselmaßnahmen automatisch wieder zurückgenommen.

Durch die beschriebene Lösung werden die aus der leitungsvermittelten Netzwelt bekannten Drosselmechanismen wie prozentuales Sperren von Verkehr zu einem Ziel mit dem nur für Paketnetze spezifischen QoS Begriff verknüpft. Das Bewerten der vorhandenen QoS Daten und die daraus resultierenden Stufen des QoS Verlustes für eine Ursprungs/Ziel-Beziehung werden als Trigger für die automatisch aktivierten Reduktionsmaßnahmen verwendet.

Als Vorteile des beschriebenen Ansatzes sind das automatische, verbindungsbezogene Sammeln und Auswerten von QoS Daten und die automatische Drosselung des betroffenen Verkehrs zu nennen. Dadurch kann innerhalb kürzester Zeit auf eine Degradierung der QoS auf bestimmten Wegen durch das IP Netz oder auch in unmittelbarer Umgebung eines Gateway und unabhängig vom Ziel reagiert werden. Die automatische Drosselung des Verkehrs verringert die Last auf den betroffenen Strecken des Paketnetzes und trägt so zur Stabilität des Netzes oder einzelner Teile des Netzes bei.

Da RTP/RTCP als Übertragungsprotokolle für den Mediastream (z.B. Sprache) im IP Bereich durch die IETF standardisiert wurde, ist es sowohl technisch als auch wirtschaftlich besonders vorteilhaft, QoS Daten auf die standardkonforme Weise zu sammeln und zu übertragen.

Das automatische Erkennen von QoS Problemen und das Einleiten von geeigneten Gegenmaßnahmen genießt für alle Anbieter des Virtual Trunking Szenarios aufgrund der Resonanz beim Kunden hohe Priorität.

Die Erfindung wird im folgenden anhand von Ausführungsbeispielen, die in den Figuren dargestellt sind, näher erläutert. Es zeigt hierbei:
- Figur 1: eine Anordnung zur Durchführung des erfindungsgemäßen Verfahrens, die als hybrides Netz mit einem paketorientierten IP Netz (PN) im Core und leitungsvermittelten Telefonnetzen (LN) im Access ausgebildet ist,
- Figur 2: Beispiel einer QoS Matrix eines Gateway Controllers (MGC) für Virtual Trunking, die QoS spezifische Verbindungsdaten und Daten zur Reduzierung des Verkehrs zwischen Gateways (GW) im Virtual Trunking Szenario enthält.

Ein Gateway GW sendet am Ende jeder Verbindung QoS Daten wie z.B.
- Anzahl der gesendeten und empfangenen Pakete,
- Anzahl der verlorengegangenen Pakete,
- mittlerer Jitterwert,
- mittlere Paketverzögerung
an den zugehörigen Media Gateway Controller MGC mittels MGCP oder MEGACO. Vorteilhaft werden hierzu die sowohl bei MGCP als auch bei MEGACO vorgesehenen Möglichkeiten genutzt, qualitätsbezogene Verbindungsdaten vom Gateway GW an den zugehörigen MGC zu übermitteln. Der MGC kennt Urspung und Ziel der Verbindung und setzt die erhaltenen QoS Daten in Beziehung zu früher erhaltenen QoS Daten, die ebenfalls dieser Ursprungs-/ Zielbeziehung zugeordnet sind. Daraus können ausgehend von einer festgelegten minimalen Anzahl von Verbindungen statistische Ausagen über die Qualität des Weges vom Ursprung zum Ziel gemacht werden. Falls die ermittelten QoS Werte bestimmte Grenzwerte überschreiten, kann automatisch mit Gegenmaßnahmen begonnen werden, die den Verkehr zwischen dem betrachteten Ursprung und Ziel drosseln. Falls die zukünftig ermittelten QoS Werte eine Verbesserung der Situation im IP Netz anzeigen, wird die Verkehrsdrosselung automatisch zurückgestuft oder gänzlich deaktiviert.

Vorteilhaft gibt jede Implementation dem Betreiber des MGC die Möglichkeit, die Art der Gegenmaßnahme auszuwählen.

Abschließend sei betont, dass die Beschreibung der für die Erfindung relevanten Komponenten grundsätzlich nicht einschränkend zu verstehen ist. Für einen einschlägigen Fachmann ist insbesondere offensichtlich, dass Begriffe wie 'Gateway' oder 'Gateway Controller' funktional und nicht physikalisch zu verstehen sind. Somit können sie beispielsweise auch teilweise oder vollständig in Software und/oder über mehrere physikalische Einrichtungen verteilt realisiert werden.

## Patentansprüche

1. Verfahren zur Verkehrssteuerung bei Virtual Trunking über ein paketorientiertes Netz (PN) mit einer Mehrzahl von Gateways (GW), insbesondere ein IP Netz,
mit folgenden, automatisch ablaufenden Schritten:
- es werden aktuelle Qualitätsdaten in der Mehrzahl von Gateways des paketorientierten Netzes ermittelt, die für die Übertragungsqualität in dem paketorientierten Netz repräsentativ sind,
- die Qualitätsdaten werden nach Maßgabe von zumindest einem vorgegebenen Kriterium in den Gateways und/oder nach deren Übermittlung in zumindest einem, den Gateways zugeordneten Gateway Controller (MGC) bewertet,
- bei Nichterfüllung des Kriteriums wird die Verkehrsübertragung in Bezug auf das paketorientierte Netz so gesteuert, dass die Übertragungsqualität der in diesem Netz bestehenden und neuen Verkehrsströme auf einem hinreichend hohen QoS Niveau bleibt,
**dadurch gekennzeichnet,**
**dass** die Verkehrssteuerung unter Berücksichtigung einer Matrix bewirkt wird, in der für jede Relation zwischen allen Ursprüngen und Zielen des Netzes zumindest ein Wert gespeichert wird, der zumindest mittelbar für die aktuelle Übertragungsqualität zwischen dem jeweiligen Ursprung und dem jeweiligen Ziel repräsentativ ist.

2. Verfahren nach Anspruch 1,
bei dem die Verkehrssteuerung eine ursprungs- und/oder wegebezoge Reduzierung, insbesondere auf eine festgelegte Anrufrate, und/oder Umlenkung und/oder Ausdünnung und/oder zeitliche Sperrung der Verkehrsströme umfasst.

3. Verfahren nach einem der vorstehenden Ansprüche,
bei dem das hinreichend hohe Niveau dann erreicht ist, wenn die objektive und/oder subjektiv von den Kunden empfundene Übertragungsqualität nicht nachhaltig leidet.

4. Verfahren nach einem der vorstehenden Ansprüche,
bei dem die Qualitätsdaten individuell pro übertragenem Verkehrsstrom ermittelt werden.

5. Verfahren nach einem der vorstehenden Ansprüche,
bei dem die Qualitätsdaten mit Hilfe des RTP Protokolls ermittelt werden.

6. Verfahren nach einem der vorstehenden Ansprüche,
bei dem die Qualitätsdaten jeweils während der Übertragung eines Verkehrsstroms gesammelt und nach dessen Übertragung bewertet werden.

7. Verfahren nach einem der vorstehenden Ansprüche,
bei dem auf der Diagonalen der Matrix zumindest ein Wert gespeichert wird, der zumindest mittelbar für die Übertragungsqualität des jeweiligen Ursprungs bzw. Ziels selbst zumindest mittelbar repräsentativ ist.

8. Verfahren nach einem der vorstehenden Ansprüche,
bei dem bei Zuordnung der Matrix zu dem Gateway Controller die Ursprünge und Ziele den Gateways, die von dem Gateway Controller gesteuert werden sowie allen weiteren Gateway Controllern, mit denen Signalisierungsnachrichten ausgetauscht werden, entsprechen.

9. Verfahren nach einem der vorstehenden Ansprüche,
bei dem aus dem Wert zumindest mittelbar zumindest eine Maßnahme zur Verkehrssteuerung abgeleitet wird.

10. Verfahren nach dem vorstehenden Anspruch,
bei dem durch die Maßnahme festgelegt wird, wieviel des Verkehrs vom jeweiligen Ursprung zum jeweiligen Ziel abgewiesen wird.

11. Verfahren nach einem der vorstehenden Ansprüche,
bei dem der Verkehr umso nachhaltiger gesteuert wird, je schlechter die Übertragungsqualität wird.

12. Verfahren nach einem der vorstehenden Ansprüche,
bei dem bei einer Verbesserung einer zuvor verminderten Übertragungsqualität eine bereits bestehende oder eingeleitete Verkehrssteuerung automatisch wieder zurückgenommen wird.

13. Verfahren nach einem der vorstehenden Ansprüche,
bei dem im Falle einer Verkehrssteuerung in vorgelagerten Vermittlungsstellen (LN) eine erneute Wegesuche zur Bestimmung von alternativen Wegen durchgeführt wird.

14. Computerprogrammprodukt umfassend Softwarecodeabschnitte, mit denen ein Verfahren nach einem der vorstehenden Verfahrensansprüche durch einen Prozessor ausgeführt wird.

15. Vorrichtung, insbesondere Gateway oder Gateway Controller, umfassend zumindest ein Mittel zur Durchführung eines Verfahrens nach einem der vorstehenden Verfahrensansprüche.

16. Anordnung, insbesondere paketorientiertes Netz, umfassend zumindest eine Vorrichtung und/oder zumindest ein Computerprogrammprodukt nach einem der vorstehenden Ansprüche.

## Claims

1. Method for controlling traffic with virtual trunking via a packet-oriented network (PN) having a number of gateways (GW), particular an IP network,
comprising the following, automatically executed steps:
- current quality data, which are representative of the transmission quality in the packet-oriented network, are determined in the multiplicity of gateways of the packet-oriented network,
- the quality data are evaluated as determined by at least one predetermined criterion in the gateways and/or after their transmission in at least one gateway controller (MGC) allocated to the gateways,
- when the criterion is not met, the traffic transmission is controlled with respect to the packet-oriented network in such a manner that the transmission quality of the traffic streams existing in this network and new traffic streams remains at a sufficiently high QoS level,
**characterized in that** the traffic control is effected by taking into consideration a matrix in which at least one value which is at least indirectly representative of the current transmission quality between the respective origin and the respective destination is stored for each relation between all origins and destinations of the network.

2. Method according to Claim 1, in which the traffic control comprises an origin- and/or path-related reduction, particularly to a fixed calling rate, and/or diversion and/or thinning-out and/or temporal blocking of the traffic streams.

3. Method according to one of the preceding claims, in which the sufficiently high level is reached when the transmission quality sensed objectively and/or subjectively by the customers does not persistently suffer.

4. Method according to one of the preceding claims, in which the quality data are determined individually per transmitted traffic stream.

5. Method according to one of the preceding claims, in which the quality data are determined with the aid of the RTP protocol.

6. Method according to one of the preceding claims, in which the quality data are in each case collected during the transmission of a traffic stream and are evaluated after its transmission.

7. Method according to one of the preceding claims, in which at least one value which is at least indirectly representative of the transmission quality of the respective origin or destination itself is stored on the diagonal of the matrix.

8. Method according to one of the preceding claims, in which, when the matrix is allocated to the gateway controller, the origins and destinations correspond to the gateways which are controlled by the gateway controller and all other gateway controllers with which signalling messages are exchanged.

9. Method according to one of the preceding claims, in which at least one measure for traffic control is derived at least indirectly from the value.

10. Method according to the preceding claim, in which the measure specifies how much of the traffic from the respective origin to the respective destination is rejected.

11. Method according to one of the preceding claims, in which the traffic is controlled the more persistently the poorer the transmission quality becomes.

12. Method according to one of the preceding claims, in which, in the case of an improvement of a previously reduced transmission quality, an already existing or initiated traffic control is automatically cut back again.

13. Method according to one of the preceding claims, in which, in the case of traffic control in upstream switching centres (LN), a new path search for determining alternative paths is performed.

14. Computer program product comprising software code sections by means of which a method according to one of the preceding method claims is executed by a processor.

15. Device, particularly gateway or gateway controller, comprising at least one means for carrying out a method according to one of the preceding method claims.

16. Arrangement, particularly packet-oriented network, comprising at least one device and/or at least one computer program product according to one of the preceding claims.

## Revendications

1. Procédé pour le contrôle du trafic en cas de Virtual Trunking au moyen d'un réseau orienté paquet (PN) comprenant une pluralité de passerelles (GW), en particulier un réseau IP,
avec les étapes suivantes se déroulant de façon automatique :
- on détermine des données de qualité actuelles dans la pluralité de passerelles du réseau orienté paquet qui sont représentatives de la qualité de transmission dans le réseau orienté paquet,
- les données de qualité sont évaluées en fonction d'au moins un critère prédéfini dans les passerelles et/ou après leur transmission dans au moins un Contrôleur de passerelles (MGC) attribué aux passerelles,
- en cas de non-exécution du critère, la transmission de trafic par rapport au réseau orienté paquet est commandée de telle sorte que la qualité de transmission des flux de trafic existants et nouveaux dans ce réseau reste sur un niveau QoS suffisamment élevé,
**caractérisé en ce que**
le contrôle du trafic est effectué en tenant compte d'une matrice dans laquelle, pour chaque relation entre toutes les origines et les cibles du réseau, on stocke au moins une valeur qui est représentative au moins indirectement de la qualité de transmission actuelle entre l'origine respective et la cible respective.

2. Procédé selon la revendication 1,
dans lequel le contrôle du trafic comprend une réduction spécifique à l'origine et/ou au chemin, en particulier par rapport à un taux d'appel défini et/ou un renvoi et/ou une dilution et/ou un blocage dans le temps des flux de trafic.

3. Procédé selon l'une quelconque des revendications précédentes,
dans lequel le niveau suffisamment élevé est atteint dans le cas où la qualité de transmission objective et/ou ressentie de façon subjective par les clients ne souffre pas de façon durable.

4. Procédé selon l'une quelconque des revendications précédentes,
dans lequel les données de qualité sont déterminées individuellement par flux de trafic transmis.

5. Procédé selon l'une quelconque des revendications précédentes,
dans lequel les données de qualité sont déterminées à l'aide du protocole RTP.

6. Procédé selon l'une quelconque des revendications précédentes,
dans lequel les données de qualité sont collectées à chaque fois pendant la transmission d'un flux de trafic et sont évaluées après sa transmission.

7. Procédé selon l'une quelconque des revendications précédentes,
dans lequel, sur la diagonale de la matrice, on mémorise au moins une valeur qui est représentative au moins indirectement de la qualité de transmission de l'origine ou de la cible respective.

8. Procédé selon l'une quelconque des revendications précédentes,
dans lequel, en cas d'attribution de la matrice au Contrôleur de passerelles, les origines et cibles correspondent aux passerelles qui sont commandées par le Contrôleur de passerelles ainsi que par tous les autres Contrôleurs de passerelles, avec lesquels des messages de signalisation sont échangés.

9. Procédé selon l'une quelconque des revendications précédentes,
dans lequel on déduit de la valeur au moins indirectement une mesure pour le contrôle du trafic.

10. Procédé selon la revendication précédente,
dans lequel on définit par la mesure quelle quantité du trafic allant de l'origine respective à la cible respective est rejetée.

11. Procédé selon l'une quelconque des revendications précédentes,
dans lequel le trafic est contrôlé de façon d'autant plus durable que la qualité de transmission devient mauvaise.

12. Procédé selon l'une quelconque des revendications précédentes,
dans lequel, dans le cas d'une amélioration d'une qualité de transmission réduite auparavant, un contrôle du trafic déjà existant ou mis en oeuvre est annulé à nouveau automatiquement.

13. Procédé selon l'une quelconque des revendications précédentes,
dans le cas d'un contrôle du trafic, on effectue dans des centres de commutation (LN) placés en amont une nouvelle recherche de chemin pour déterminer des chemins alternatifs.

14. Produit de programme informatique comprenant des parties de code de logiciel, avec lesquelles un procédé est mis en oeuvre par un processeur selon l'une quelconque des revendications précédentes.

15. Dispositif, en particulier passerelle ou Contrôleur de passerelles, comprenant au moins un moyen pour la mise en oeuvre d'un procédé selon l'une quelconque des revendications précédentes.

16. Agencement, en particulier réseau orienté paquet, comprenant au moins un dispositif et/ou au moins un produit de programme informatique selon l'une quelconque des revendications précédentes.
